# EUROPEAN PATENT APPLICATION

(11) **EP 3 046 026 A1**
(43) Date of publication of application: **20.07.2016**
(21) Application number: 14844633.9
(22) Date of filing: 18.04.2014
(51) Int. Cl.: G06F 9/445

(54) **SOFTWARE UPGRADE METHOD AND SYSTEM FOR MOBILE TERMINAL**

(30) Priority: 13.09.2013 CN 201310417037
(71) Applicant: Huizhou TCL Mobile Communication Co., Ltd., Huizhou, Guangdong 516006 (CN)
(72) Inventor: DENG, Tiejun, Huizhou, Guangdong 516006 (CN)
(74) Representative: Brachmann, Roland W.
(86) International application number: PCT/CN2014/075652
(87) International publication number: WO 2015/035777

(57) **Abstract**

Disclosed are a software upgrade method and system for a mobile terminal. The method comprises: by respectively finding partition tables of new-version software and old-version software, generating corresponding backup lists; scanning all the files of the new-version software, and generating a differential upgrade package containing a partition table and a backup list of the new-version software; according to the backup list, storing backup data in a mobile terminal which needs to be backed up in an SD card, and according to the partition table of the new-version software of the differential upgrade package, re-partitioning a memory of the mobile terminal, and correspondingly writing the backup data on the SD card in partitions; and decompressing the differential upgrade package, obtaining corresponding difference files, and according to the difference files and old-version files in the mobile terminal, generating corresponding new-version files and writing same into the mobile terminal, thereby completing the upgrade, so that the mobile terminal can also be upgraded in the case where a memory partition table needs to be changed during a software upgrade, so as to bring great convenience to a user.

## Description

### Field of the Invention

The present invention relates to the field of mobile terminals, and in particular relates to a software upgrade method and system for a mobile terminal.

### Description of the Related Art

Existing smartphones, such as a cell phone with an Android system, often need to upgrade software. Generally, a FOTA (Firmware Over-The-Air) upgrade is used. The FOTA upgrade is a simple and friendly upgrade method, which can upgrade the cell phone software to the latest version almost without asking a user to carry out any operation. Given the current tendency that the development of smartphones is fast, however, there are often situations in which the memory partition table of a cell phone needs to be revised due to the software version upgrade (or changes to software requirements). The existing FOTA mechanism is unable to handle this type of situations.

Specifically in the field of mobile terminals and the entire embedded field, with a cell phone as an example, there are typically two types of storage media, one is cell phone memory, which is typically a NAND or EMMC and is the core storage space for the cell phone; two is expanded memory, which is typically a SD card. There are two types of cell phone memory partitions (the partition hereinafter refers in particular to cell phone memory partition, and the partition table refers in particular to the partition table of a cell phone memory). One is the raw data type, i.e. writing and reading data in the form of raw data stream, and this type of partitions include bootloader, kernel, etc. The other type is the filesystem type. The file herein means computer file, which refers to a set of some data. One file represents a set of data. In this type of partitions, a file system (e.g. EXT4 or FAT) will be deployed to manage all files. If we need to read or write a file, we need to need to read or write by following the reading or writing mode of the file system. On a typical cell phone apparatus, both the system partition and the userdata partition belong to this type. Figuratively, the filesystem type partition is like a book having a table of contents. The table of contents is the META data in the partition regarding file list, file attributes, and file size. On the other hand, the raw data type partition is like a book without a table of contents. According to the actual situation of the cell phone (embedded) field, it can be simply summarized that the raw data type partition may store one file, and the filesystem type partition may store multiple files. As described above, each partition has a conventional type, and therefore, the partition type will usually not change.

Given the current tendency that the development of smartphones is fast, however, there are often situations in which the memory partition table of a cell phone needs to be revised due to the software version upgrade (or changes to software requirements). Changes to a partition table include changes to the starting address and to the size of the partitions. Such changes to the starting address and to the size of the partitions are fatal to a filesystem type partition, as this type of changes may very likely corrupt META data. Once the META data is corrupted, some files in the partition cannot be read or written. Although a raw data type partition does not have META data, this type of changes may still likely corrupt data in the partition. Moreover, the FOTA mechanism is based on a file differential algorithm and all of its operations are file operations. In the event that files are corrupted, the FOTA operations will certainly fail. However, the existing FOTA mechanism does not provide relevant measures for "changes to a partition table of a memory between new and old versions of the software". As a result, the existing FOTA mechanism is unable to process this type of situations. Since the existing FOTA upgrade method cannot handle this type of situations, it will make the development more difficult if the original partition table has to be kept, and moreover, users will not be able to have the latest and the best user experience.

Therefore, the prior art still needs to be improved and developed.

### Summary of the Invention

The technical problem that the present invention intends to solve is, in light of the above drawbacks of the prior art, to provide a software upgrade method and system for a mobile terminal which is intended to solve the problem of inconvenient software upgrade according to the prior art.

The present invention employs the following technical solution to solve the technical problem:
A software upgrade method for a mobile terminal, wherein it comprises the following steps:
   A. According to the new version software and the old version software, locating partition tables of the new version software and the old version software, respectively, comparing the difference between the new and old partition tables, and generating a corresponding backup list;
   B. Scanning all files of the new version software and generating a differential upgrade package that comprises the partition table of said new version software and the backup list;
   C. According to the backup list in said differential upgrade package, detecting the total size of the backup data to be backed up in the mobile terminal, and comparing said total size of the backup data with the remaining space of the SD card of the mobile terminal, and when said total size of the backup data is smaller than the remaining space of the SD card of the mobile terminal, going to Step D;
   D. Saving the backup data to be backed up in the mobile terminal into the SD card according to said backup list, re-partitioning the mobile terminal memory according to said partition table of the new version software in said differential upgrade package, detecting the partition type, and correspondingly writing the backup data on the SD card into the partition;
   E. Decompressing said differential upgrade package to obtain a corresponding differentiating file, generating corresponding new version files according to said differentiating file and the old version files in the mobile terminal, and writing into the mobile terminal to complete the upgrade.

The software upgrade method for a mobile terminal, wherein Step A specifically comprises:
A1. According to the new version software and the old version software, acquiring partition tables of the new version software and the old version software, respectively;
A2. Traversing the partition table of the new version, if traversal is not completed, going to Step A3; if traversal is completed, ending;
A3. Taking one item from the new partition table, and checking if a partition in the old partition table has the same name, if yes, going to Step A4; if no, going to Step A2;
A4. Checking if both new and old partitions have the same size and starting address, if yes, going to Step A2; if no, going to Step A5;
A5. Checking the partition type, adding a description item in the backup list to describe the name and type of said partition, and returning to Step A2.

The software upgrade method for a mobile terminal, wherein Step B specifically comprises:
B 1. Scanning all files of the new version and old version software packages and obtaining corresponding file lists, respectively;
B2. Traversing the partition table of the new version, if traversal is not completed, going to Step B3; if traversal is completed, adding the partition table of the new version into the differential upgrade package, and ending;
B3. Taking one item from the file list of the new version, and checking if a file in the file list of the old version has the same file name, if no, adding the file of the new version into the differential upgrade package in a word by word manner, and going to Step B2; if yes, continuing to Step B4;
B4. In a differentiating package comparison tool, using files of the new version and old version as input to generate a differentiating file, adding a corresponding description item in the differentiating file, and returning to Step B2.

The software upgrade method for a mobile terminal, wherein Step C specifically comprises:
C1. Checking if the mobile terminal has a SD card, if yes, going to Step C2; if no, reporting an error, and ending;
C2. Acquiring the backup list from the differential upgrade package, reading the existing partition table from the mobile terminal memory, traversing the backup list, if traversal is not completed, going to Step C3; if traversal is completed, going to Step C4;
C3. Taking one item from the backup list, locating the corresponding partition in the existing partition table, checking the partition type, if it is a partition of raw data type, adding cumulatively the partitions until the size is up to the total size of the backup data; if it is a partition of filesystem type, adding cumulatively the total size of all files in the partition up to the total size of the backup data; returning to Step C2 until traversal is completed;
C4. Checking the size of the remaining space of the SD card of the mobile terminal, if it is larger than the total size of the backup data, going to Step D; otherwise, reporting an error, and ending.

The software upgrade method for a mobile terminal, wherein Step D specifically comprises:
D1. Acquiring the backup list from the differential upgrade package, reading the existing partition table from the mobile terminal memory, traversing the backup list, if traversal is not completed, going to Step D2; if traversal is completed, going to Step D3;
D2. Taking one item from the backup list, locating the corresponding partition in the existing partition table, checking the partition type, if it is a partition of raw data type, reading data from the whole partition, and saving these data as one file on the SD card; if it is a partition of filesystem type, packing files in the partition to one file in the TAR file format, and saving this file onto the SD card; returning to Step D1 until traversal is completed;
D3. Acquiring the new partition table from the differential upgrade package, repartitioning the mobile terminal memory according to the new partition table, traversing the backup list, if traversal is not completed, going to Step D4; if traversal is completed, ending;
D4. Taking one item from the backup list, locating the corresponding partition in the new partition table, checking the partition type, if it is a partition of raw data type, writing the corresponding file that is backed up on the SD card into the partition; if it is a partition of filesystem type, decompressing the corresponding TAR file that is backed up on the SD card, and writing all files in the TAR file into the partition, and returning to Step D3 until traversal is completed.

The software upgrade method for a mobile terminal, wherein Step E specifically comprises:
E1. Decompressing the differential upgrade package to obtain the corresponding differentiating file and the differentiating file list, traversing the differentiating file list, if traversal is not completed, going to Step E2; if traversal is completed, ending;
E2. Taking one item from the differentiating file list, generating corresponding new version files according to said differentiating file and the old version files in the mobile terminal, writing into the mobile terminal, and returning to Step E1 until traversal is completed.

A software upgrade method for a mobile terminal, wherein it comprises the following steps:
A. According to the new version software and the old version software, locating partition tables of the new version software and the old version software, respectively, comparing the difference between the new and old partition tables, and generating a corresponding backup list;
B. Scanning all files of the new version software and generating a differential upgrade package that comprises the partition table of said new version software and the backup list;
C. According to the backup list in said differential upgrade package, detecting the total size of the backup data to be backed up in the mobile terminal, and comparing said total size of the backup data with the remaining space of the SD card of the mobile terminal, and when said total size of the backup data is smaller than the remaining space of the SD card of the mobile terminal, going to Step D;
D. Saving the backup data to be backed up in the mobile terminal into the SD card according to said backup list, re-partitioning the mobile terminal memory according to said partition table of the new version software in said differential upgrade package, detecting the partition type, and correspondingly writing the backup data on the SD card into the partition;
E. Decompressing said differential upgrade package to obtain a corresponding differentiating file, generating corresponding new version files according to said differentiating file and the old version files in the mobile terminal, and writing into the mobile terminal to complete the upgrade;
   wherein, the partition table in Step A has two forms: at a PC end, the partition table is present in the form of a partition table description file, which comprises partition name, partition size, partition starting address and partition type; at a cell phone end, the partition table is present in the form of memory header data and memory internal partition table data, which also comprises partition name, partition size, partition
   starting address and partition type; then, the PC end compares the difference between the new and old partition tables, and generates a corresponding backup list;
   Step E specifically comprises:
   E1. Decompressing the differential upgrade package to obtain the corresponding differentiating file and the differentiating file list, traversing the differentiating file list, if traversal is not completed, going to Step E2; if traversal is completed, ending;
   E2. Taking one item from the differentiating file list, generating corresponding new version files according to said differentiating file and the old version files in the mobile terminal, writing into the mobile terminal, and returning to Step E1 until traversal is completed.

The software upgrade method for a mobile terminal, wherein Step A specifically comprises:
A1. According to the new version software and the old version software, acquiring partition tables of the new version software and the old version software, respectively;
A2. Traversing the partition table of the new version, if traversal is not completed, going to Step A3; if traversal is completed, ending;
A3. Taking one item from the new partition table, and checking if a partition in the old partition table has the same name, if yes, going to Step A4; if no, going to Step A2;
A4. Checking if both new and old partitions have the same size and starting address, if yes, going to Step A2; if no, going to Step A5;
A5. Checking the partition type, adding a description item in the backup list to describe the name and type of said partition, and returning to Step A2.

The software upgrade method for a mobile terminal, wherein Step B specifically comprises:
B 1. Scanning all files of the new version and old version software packages and obtaining corresponding file lists, respectively;
B2. Traversing the partition table of the new version, if traversal is not completed, going to Step B3; if traversal is completed, adding the partition table of the new version into the differential upgrade package, and ending;
B3. Taking one item from the file list of the new version, and checking if a file in the file list of the old version has the same file name, if no, adding the file of the new version into the differential upgrade package in a word by word manner, and going to Step B2; if yes, continuing to Step B4;
B4. In a differentiating package comparison tool, using files of the new version and old version as input to generate a differentiating file, adding a corresponding description item in the differentiating file, and returning to Step B2.

The software upgrade method for a mobile terminal, wherein Step C specifically comprises:
C1. Checking if the mobile terminal has a SD card, if yes, going to Step C2, if no, reporting an error, and ending;
C2. Acquiring the backup list from the differential upgrade package, reading the existing partition table from the mobile terminal memory, traversing the backup list, if traversal is not completed, going to Step C3; if traversal is completed, going to Step C4;
C3. Taking one item from the backup list, locating the corresponding partition in the existing partition table, checking the partition type, if it is a partition of raw data type, adding cumulatively the partitions until the size is up to the total size of the backup data; if it is a partition of filesystem type, adding cumulatively the total size of all files in the partition up to the total size of the backup data; returning to Step C2 until traversal is completed;
C4. Checking the size of the remaining space of the SD card of the mobile terminal, if it is larger than the total size of the backup data, going to Step D; otherwise, reporting an error, and ending.

The software upgrade method for a mobile terminal, wherein Step D specifically comprises:
D1. Acquiring the backup list from the differential upgrade package, reading the existing partition table from the mobile terminal memory, traversing the backup list, if traversal is not completed, going to Step D2; if traversal is completed, going to Step D3;
D2. Taking one item from the backup list, locating the corresponding partition in the existing partition table, checking the partition type, if it is a partition of raw data type, reading data from the whole partition, and saving these data as one file on the SD card; if it is a partition of filesystem type, packing files in the partition to one file in the TAR file format, and saving this file onto the SD card; returning to Step D 1 until traversal is completed;
D3. Acquiring the new partition table from the differential upgrade package, repartitioning the mobile terminal memory according to the new partition table, traversing the backup list, if traversal is not completed, going to Step D4; if traversal is completed, ending;
D4. Taking one item from the backup list, locating the corresponding partition in the new partition table, checking the partition type, if it is a partition of raw data type, writing the corresponding file that is backed up on the SD card into the partition; if it is a partition of filesystem type, decompressing the corresponding TAR file that is backed up on the SD card, and writing all files in the TAR file into the partition, and returning to Step D3 until traversal is completed.

The software upgrade method for a mobile terminal, wherein Step E specifically comprises:
E1. Decompressing the differential upgrade package to obtain the corresponding differentiating file and the differentiating file list, traversing the differentiating file list, if traversal is not completed, going to Step E2; if traversal is completed, ending;
E2. Taking one item from the differentiating file list, generating corresponding new version files according to said differentiating file and the old version files in the mobile terminal, writing into the mobile terminal, and returning to Step E1 until traversal is completed.

A software upgrade system for a mobile terminal, wherein it comprises:
- a backup list generating module for, according to the new version software and the old version software, locating partition tables of the new version software and the old version software, respectively, comparing the difference between the new and old partition tables, and generating a corresponding backup list;
- a differential upgrade package generating module for scanning all files of the new version software and generating a differential upgrade package that comprises the partition table of said new version software and the backup list;
- a capacity detection module for, according to the backup list in said differential upgrade package, detecting the total size of the backup data to be backed up in the mobile terminal, and comparing said total size of the backup data with the remaining space of the SD card of the mobile terminal;
- a data backup and recovery module for saving the backup data to be backed up in the mobile terminal into the SD card according to said backup list, repartitioning the mobile terminal memory according to said partition table of the new version software in said differential upgrade package, detecting the partition type, and correspondingly writing the backup data on the SD card into the partition;
- an upgrade module for decompressing said differential upgrade package to obtain a corresponding differentiating file, generating corresponding new version files according to said differentiating file and the old version files in the mobile terminal, and writing into the mobile terminal to complete the upgrade.

The software upgrade system for a mobile terminal, wherein said backup list generating module specifically comprises:
- a partition table acquisition unit for, according to the new version software and the old version software, acquiring partition tables of the new version software and the old version software, respectively;
- a partition table traversing unit for traversing the partition table of the new version;
- a name comparison unit for taking one item from the new partition table, and checking if a partition in the old partition table has the same name;
- a size and starting address comparison unit for checking if both new and old partitions have the same size and starting address;
- a backup list revising unit for checking the partition type and adding a description item in the backup list to describe the name and type of said partition.

The software upgrade system for a mobile terminal, wherein said capacity detection module specifically comprises:
- a SD card detecting unit for checking if the mobile terminal has a SD card;
- a first backup list traversing unit for acquiring the backup list from the differential upgrade package, reading the existing partition table from the mobile terminal memory, and traversing the backup list;
- a backup data total size calculation unit for taking one item from the backup list, locating the corresponding partition in the existing partition table, checking the partition type, if it is a partition of raw data type, adding cumulatively the partitions until the size is up to the total size of the backup data; if it is a partition of filesystem type, adding cumulatively the total size of all files in the partition up to the total size of the backup data;
- a capacity comparison unit for checking the size of the remaining space of the SD card of the mobile terminal, and comparing the total size of the backup data with the remaining space of the SD card of the mobile terminal.

The software upgrade system for a mobile terminal, wherein said data backup and recovery module specifically comprises:
- a second backup list traversing unit for acquiring the backup list from the differential upgrade package, reading the existing partition table from the mobile terminal memory, and traversing the backup list;
- a data backup unit for taking one item from the backup list, locating the corresponding partition in the existing partition table, checking the partition type, if it is a partition of raw data type, reading data from the whole partition, and saving these data as one file on the SD card; if it is a partition of filesystem type, packing files in the partition to one file in the TAR file format, and saving this file onto the SD card;
- a third backup list traversing unit for acquiring the new partition table from the differential upgrade package, re-partitioning the mobile terminal memory according to the new partition table, and traversing the backup list;
- a data recovery unit for taking one item from the backup list, locating the corresponding partition in the new partition table, checking the partition type, if it is a partition of raw data type, writing the corresponding file that is backed up on the SD card into the partition; if it is a partition of filesystem type, decompressing the corresponding TAR file that is backed up on the SD card, and writing all files in the TAR file into the partition.

The software upgrade method and system for a mobile terminal according to the present invention effectively solve the problem that the existing FOTA mechanism is unable to handle the circumstance in which the partition table of a mobile terminal memory needs to be revised due to software version upgrade or software requirement changes, and consequently the software cannot be upgraded, said method locates, according to the new version software and the old version software, partition tables of the new version software and the old version software, comparing differences between the new and old partition tables, and generating a corresponding backup list; scanning all files of the new version software and generating a differential upgrade package that comprises the partition table of said new version software and the backup list; according to the backup list in said differential upgrade package, detecting the total size of the backup data to be backed up in the mobile terminal, and comparing said total size of the backup data with the remaining space of the SD card of the mobile terminal, and when said total size of the backup data is smaller than the remaining space of the SD card of the mobile terminal, saving the backup data to be backed up in the mobile terminal into the SD card according to said backup list, re-partitioning the mobile terminal memory according to said partition table of the new version software in said differential upgrade package, detecting the partition type, and correspondingly writing the backup data on the SD card into the partition; decompressing said differential upgrade package to obtain a corresponding differentiating file, generating corresponding new version files according to said differentiating file and the old version files in the mobile terminal, and writing into the mobile terminal to complete the upgrade, such that the mobile terminal can be upgraded even in the circumstance that the software upgrade needs to change the memory partition table. The implementation method thereof is simple and achieved through software, and the cost is low.

### Brief Description of the Drawings

- Fig.1: is a flow chart of a preferred embodiment of the software upgrade method for a mobile terminal according to the present invention.
- Fig.2: is a flow chart of an application embodiment of generating a backup list in the software upgrade method for a mobile terminal according to the present invention.
- Fig.3: is a flow chart of an application embodiment of generating a differential upgrade package in the software upgrade method for a mobile terminal according to the present invention.
- Fig.4: is a flow chart of an application embodiment of detecting the space of a SD card in the software upgrade method for a mobile terminal according to the present invention.
- Fig.5: is a flow chart of an application embodiment of backing up and writing data in the software upgrade method for a mobile terminal according to the present invention.
- Fig.6: is a flow chart of an application embodiment of applying the differential upgrade package in the software upgrade method for a mobile terminal according to the present invention.
- Fig.7: is a structural block diagram of a preferred embodiment of the software upgrade system for a mobile terminal according to the present invention.

### Detailed Description of the Embodiments

The present invention provides a software upgrade method and system for a mobile terminal. To make the objects, technical solutions and advantages of the present invention clearer and more specific, the present invention will be further described in detail below with reference to the accompanying drawings and embodiments. It should be understood that the specific embodiments herein are only used to describe the present invention, rather than limit the present invention.

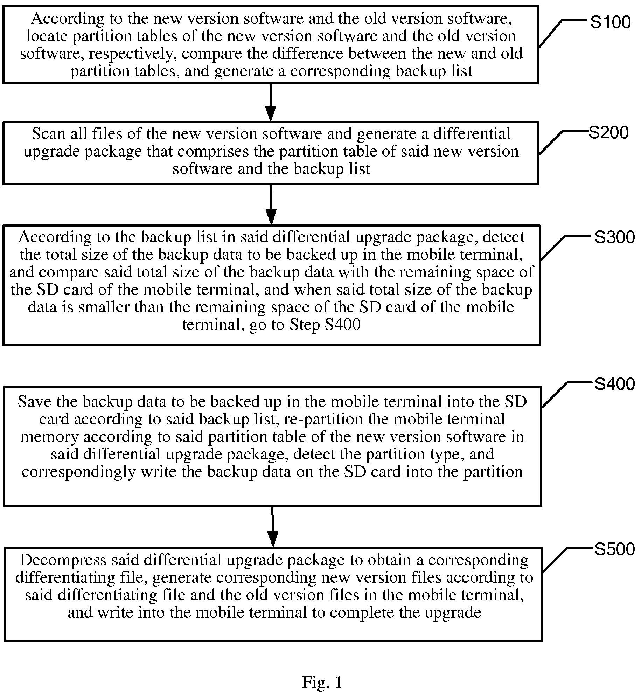

Please refer to Fig.1, which is a flow chart of a preferred embodiment of the software upgrade method for a mobile terminal according to the present invention. As shown in Fig.1, the software upgrade method for a mobile terminal according to the present invention comprises the following steps:
Step S100. According to the new version software and the old version software, locating partition tables of the new version software and the old version software, respectively, comparing the difference between the new and old partition tables, and generating a corresponding backup list;
Step S200. Scanning all files of the new version software and generating a differential upgrade package that comprises the partition table of said new version software and the backup list;
Step S300. According to the backup list in said differential upgrade package, detecting the total size of the backup data to be backed up in the mobile terminal, and comparing said total size of the backup data with the remaining space of the SD card of the mobile terminal, and when said total size of the backup data is smaller than the remaining space of the SD card of the mobile terminal, going to Step S400;
Step S400. Saving the backup data to be backed up in the mobile terminal into the SD card according to said backup list, re-partitioning the mobile terminal memory according to said partition table of the new version software in said differential upgrade package, detecting the partition type, and correspondingly writing the backup data on the SD card into the partition;
Step S500. Decompressing said differential upgrade package to obtain a corresponding differentiating file, generating corresponding new version files according to said differentiating file and the old version files in the mobile terminal, and writing into the mobile terminal to complete the upgrade.

With the mobile terminal being a cell phone as an example, the above steps will be described in detail below with reference to specific embodiments.

In a practical application, Steps S100 and S200 are completed at a PC end (i.e. a server), while Steps S300 to S500 are all completed in a cell phone. Simply put, the PC end generates a corresponding differential upgrade package and sends it to the cell phone, or the cell phone downloads it, and then the software upgrade is performed in the cell phone.

In Step S100, according to the new version software and the old version software, the PC end locates partition tables of the new version software and the old version software, respectively, compares the difference between the new and old partition tables, and generates a corresponding backup list. Specifically, the PC end obtains the new and old partition tables, respectively, according to the new version software and the old version software. The partition tables have two forms: at a PC end, the partition table is present in the form of a "partition table description file", which comprises partition name, partition size, partition starting address and partition type; at a cell phone end, the partition table is present in the form of "memory header data and memory internal partition table data", which also comprises partition name, partition size, partition starting address and partition type. Then, the PC end compares the difference between the new and old partition tables, and generates a corresponding backup list. Said backup list is a list generated at the PC end, and describes which partitions need to be backed up. The program at the cell phone end will complete the backup action according to this list.

In a practical application, Step S100 specifically comprises: S110. Acquiring partition tables of the new version software and the old version software, respectively; S120. Traversing the partition table of the new version, if traversal is not completed, going to Step S130; if traversal is completed, ending; S130. Taking one item from the new partition table, and checking if a partition in the old partition table has the same name, if yes, going to Step S140; if no, going to Step S120; S140. Checking if both new and old partitions have the same size and starting address, if yes, going to Step S120; if no, going to Step S150; S150. Checking the partition type, adding a description item in the backup list to describe the name and type of said partition, and returning to Step S120.

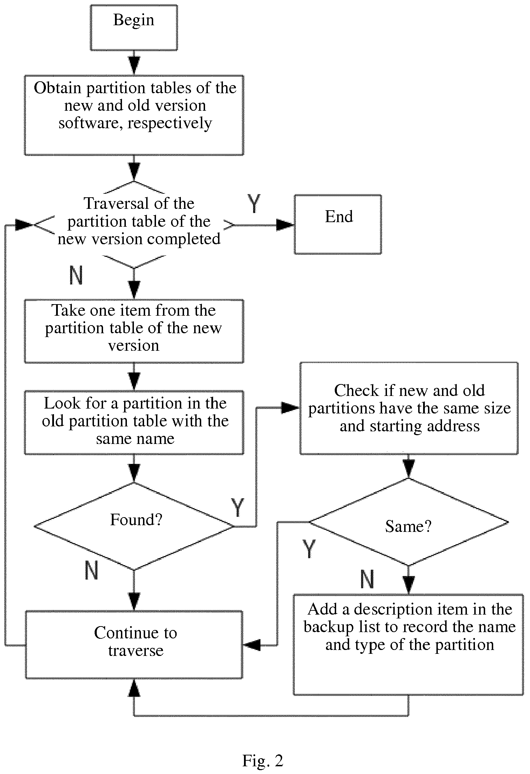

Specifically, please refer to Fig.2. Fig.2 is a flow chart of an application embodiment of generating a backup list in the software upgrade method for a mobile terminal according to the present invention, namely a flow chart of an application embodiment of Step S100 in the software upgrade method for a mobile terminal according to the present invention. As shown in Fig.2, the PC end first acquires, according to the new and old version software, partition tables of the new and old version software, respectively, then traverses the partition table of the new version, takes one item from the new partition table, and checks if a partition in the old partition table has the same name, if yes, goes to the next step to check if both new and old partitions have the same size and starting address, if no, continues to traverse. It checks if both new and old partitions have the same size and starting address, if yes, continues to traverse, if no, continues to check the partition type, and adds a description item in the backup list to describe the name and type of said partition. After adding the description item, continues to traverse until all items in the new partition table have been taken out, i.e. traversal is completed, and then ends.

In Step S200, the PC end scans all files of the new version software and generates a differential upgrade package that comprises the partition table of said new version software and the backup list. In a practical application, Step S200 specifically comprises: S210. Scanning all files of the new version and old version software packages and obtaining corresponding file lists, respectively; S220. Traversing the partition table of the new version, if traversal is not completed, going to Step S230; if traversal is completed, adding the partition table of the new version into the differential upgrade package, and ending; S230. Taking one item from the file list of the new version, and checking if a file in the file list of the old version has the same file name, if no, adding the file of the new version into the differential upgrade package in a word by word manner, and going to Step S220; if yes, continuing to Step S240; S240. In a differentiating package comparison tool, using files of the new and old versions as input to generate a differentiating file, adding a corresponding description item in the differentiating file, and returning to Step S220.

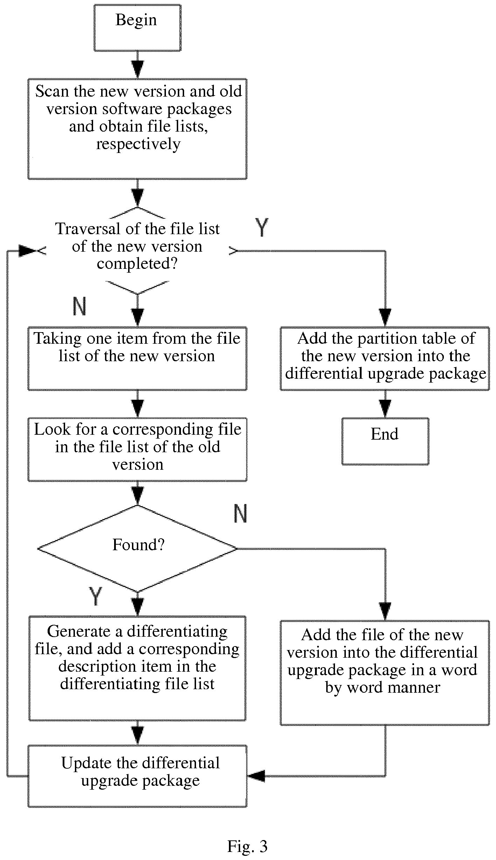

Specifically, please refer to Fig.3. Fig.3 is a flow chart of an application embodiment of generating a differential upgrade package in the software upgrade method for a mobile terminal according to the present invention, namely a flow chart of an application embodiment of Step S200 in the software upgrade method for a mobile terminal according to the present invention. As shown in Fig.3, the PC end scans all files of the new version and the old version to generate corresponding file lists, respectively, and then traverses the file list of the new version, if the traversal of the file list of the new version is not completed, takes one item from the file list of the new version, if the traversal of the file list of the new version is completed, then ends. It checks if a file in the old version has the same file name as that of the file taken from the file list of the new version, if no, adds the file of the new version into the differential upgrade package in a word by word manner, updates the differential upgrade package, and continues to traverse, if yes, uses bsdiff (a differentiating package comparison tool) as the tool, uses files of the new and old versions as input to generate a differentiating file, and writes corresponding information, such as file name and check code, into the differentiating file list. It continues to traverse until the traversal of the file list of the new version is completed, and then adds the file list of the new version into the differential upgrade package.

In Step S300, according to the backup list in said differential upgrade package, the mobile terminal detects the total size of the backup data to be backed up in the mobile terminal, compares said total size of the backup data with the remaining space of the SD card of the mobile terminal, and when said total size of the backup data is smaller than the remaining space of the SD card of the mobile terminal, goes to Step S400. In a practical application, Step S300 specifically comprises: S310. Checking if the mobile terminal has a SD card, if yes, going to Step S320, if no, reporting an error, and ending; S320. Acquiring the backup list from the differential upgrade package, reading the existing partition table from the mobile terminal memory, traversing the backup list, if traversal is not completed, going to Step S330; if traversal is completed, going to Step S340; S330. Taking one item from the backup list, locating the corresponding partition in the existing partition table, checking the partition type, if it is a partition of raw data type, adding cumulatively the partitions until the size is up to the total size of the backup data; if it is a partition of filesystem type, adding cumulatively the total size of all files in the partition up to the total size of the backup data; returning to Step S320 until traversal is completed; S340. Checking the size of the remaining space of the SD card of the mobile terminal, if it is larger than the total size of the backup data, going to Step S400; otherwise, reporting an error, and ending.

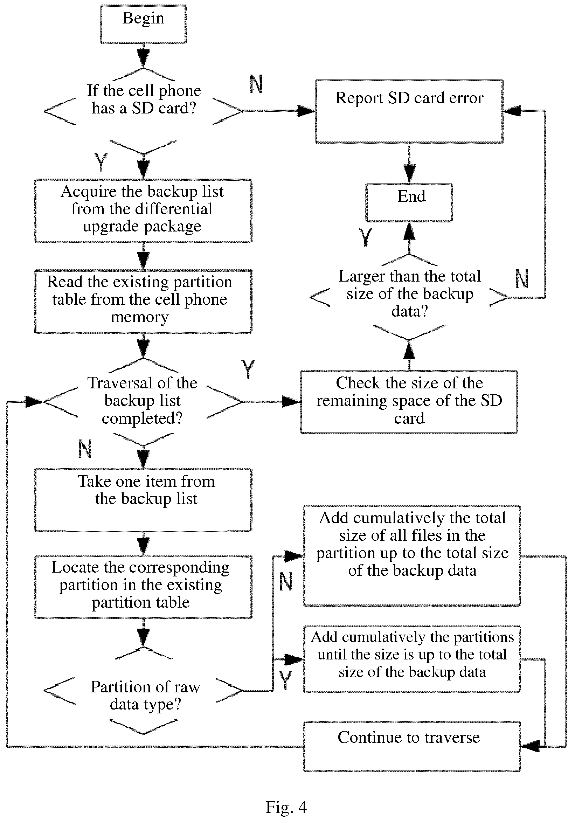

Specifically, please refer to Fig.4. Fig.4 is a flow chart of an application embodiment of detecting the space of a SD card in the software upgrade method for a mobile terminal according to the present invention, namely a flow chart of an application embodiment of Step S300 in the software upgrade method for a mobile terminal according to the present invention. As shown in the figure, the mobile terminal first checks if the space of the SD card is sufficient. In a practical application, the mobile terminal first checks if it has a SD card, if yes, continues, if no, reports an error, and ends. Then, it acquires the backup list from the differential upgrade package, reads the existing partition table from the mobile terminal memory, and initializes the variable "total size of the backup data". Subsequently, it traverses the backup list, takes one item from the backup list, if traversal is not completed, goes to the next step; if all items have been taken out, i.e. the traversal is completed, then checks the size of the remaining space of the SD card. Then, according to the one item taken from the backup list, locates the corresponding partition in the existing partition table, checks the partition type, if it is a partition of raw data type, adds cumulatively the partitions until the size is up to the total size of the backup data; if it is a partition of filesystem type, adds cumulatively the total size of all files in the partition up to the total size of the backup data, until traversal is completed and the total size of the backup data to be backed up by the mobile terminal. Then, it checks the size of the remaining space of the SD card, if it is larger than the total size of the backup data, goes to Step S400 for upgrade; otherwise, reports an error, and ends. As for the method to calculate the data size of a partition of raw data type, we are unable to know the data size in the partition since there is no META data in a partition of raw data type. Therefore, we believe that the data size in the partition is the partition size. As for the method to calculate the data size of a partition of filesystem type, the sizes of all files in the partition are added up to be the data size in the partition.

In Step S400, the mobile terminal saves the backup data to be backed up in the mobile terminal into the SD card according to said backup list, re-partitions the mobile terminal memory according to said partition table of the new version software in said differential upgrade package, detects the partition type, and correspondingly writes the backup data on the SD card into the partitions. In a practical application, Step S400 specifically comprises: S410. Acquiring the backup list from the differential upgrade package, reading the existing partition table from the mobile terminal memory, traversing the backup list, if traversal is not completed, going to Step S420; if traversal is completed, going to Step S430; S420. Taking one item from the backup list, locating the corresponding partition in the existing partition table, checking the partition type, if it is a partition of raw data type, reading data from the whole partition, and saving these data as one file on the SD card; if it is a partition of filesystem type, packing files in the partition to one file in the TAR file format, and saving this file onto the SD card; returning to Step S410 until traversal is completed; S430. Acquiring the new partition table from the differential upgrade package, re-partitioning the mobile terminal memory according to the new partition table, traversing the backup list, if traversal is not completed, going to Step S440; if traversal is completed, ending; S440. Taking one item from the backup list, locating the corresponding partition in the new partition table, checking the partition type, if it is a partition of raw data type, writing the corresponding file that is backed up on the SD card into the partition; if it is a partition of filesystem type, decompressing the corresponding TAR file that is backed up on the SD card, and writing all files in the TAR file into the partition; namely, restoring the backup data on the SD card to a corresponding partition, and returning to Step S430 until traversal is completed.

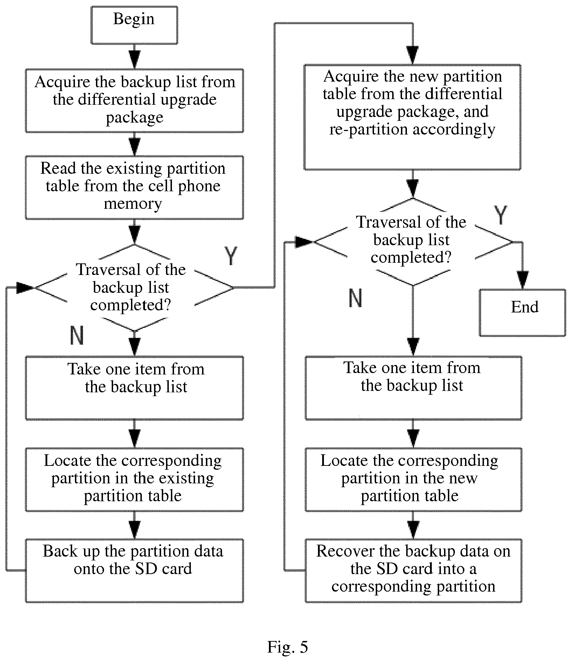

Specifically, please refer to Fig.5. Fig.5 is a flow chart of an application embodiment of backing up and writing data in the software upgrade method for a mobile terminal according to the present invention, namely a flow chart of an application embodiment of Step S400 in the software upgrade method for a mobile terminal according to the present invention. As shown in the figure, in Step S400, the cell phone backs up and restores data. The cell phone acquires the backup list from the differential upgrade package, and reads the existing partition table from the cell phone memory. Then, it traverses the backup list, takes one item from the backup list, locates the corresponding partition in the existing partition table, checks the partition type, if it is a partition of raw data type, reads data from the whole partition, and saves these data as one file on the SD card; if it is a partition of filesystem type, packs files in the partition to one file in the TAR file format, and saves this file onto the SD card, until all items of the backup list have been taken out, i.e. the traversal is completed, and consequently all data in the cell phone to be backed up have been backed up to the SD card. Subsequently, it acquires the new partition table from the differential upgrade package, re-partitions the cell phone memory according to the new partition table, traverses the backup list, takes one item from the backup list, locates the corresponding partition in the new partition table, checks the partition type, if it is a partition of raw data type, writes the corresponding file that is backed up on the SD card into the partition; if it is a partition of filesystem type, decompresses the corresponding TAR file that is backed up on the SD card, and writes all files in the TAR file into the partition, until all items of the backup list have been taken out, i.e. the traversal is completed, and consequently the backup data on the SD card are rewritten into the new partitions. As for the backup method for a partition of raw data type, as described above, data of the entire partition just need to be read in the form of raw data stream and saved as one file on the SD card. As for the backup method for a partition of filesystem type, it is completed in the TAR file format. The TAR file format is a file packaging format that complies with the GPL license. We use TAR to package all files in the partition into one file and then save this file onto a SD card.

In Step S500, the mobile terminal decompresses said differential upgrade package to obtain a corresponding differentiating file, generates corresponding new version files according to said differentiating file and the old version files in the mobile terminal, and writes into the mobile terminal to complete the upgrade. Specifically, Step S500 specifically comprises: S510. Decompressing the differential upgrade package to obtain the corresponding differentiating file and the differentiating file list, traversing the differentiating file list, if traversal is not completed, going to Step S520; if traversal is completed, ending; S520. Taking one item from the differentiating file list, generating corresponding new version files according to said differentiating file and the old version files in the mobile terminal, writing into the mobile terminal, and returning to Step S510 until traversal is completed.

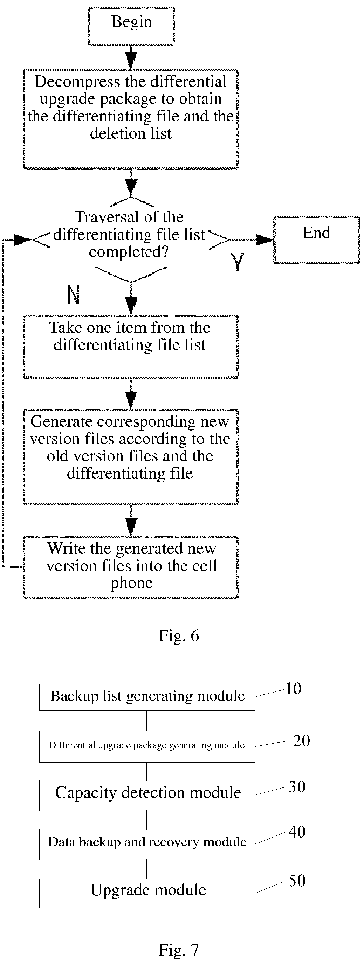

Specifically, please refer to Fig.6. Fig.6 is a flow chart of an application embodiment of applying the differential upgrade package in the software upgrade method for a mobile terminal according to the present invention, namely a flow chart of an application embodiment of Step S500 in the software upgrade method for a mobile terminal according to the present invention. As shown in the figure, the cell phone end decompresses the differential upgrade package to obtain the corresponding differentiating file and the differentiating file list, traverses the differentiating file list, takes one item from the differentiating file list, generates corresponding new version files according to the existing files in the cell phone and the differentiating file, writes the new version files into the cell phone until traversal is completed. In such a way, the software upgrade is completed for the cell phone.

The software upgrade method for a mobile terminal according to the present invention is an optimization method for the existing FOTA upgrade method, effectively solves the problem that software cannot be upgraded as the partition table of a cell phone memory is changed, and avoids the problem that since the existing FOTA upgrade method cannot handle this type of situations, the original partition table has to be kept, leading to more difficult development and users being unable to have the latest and the best user experience. As a result, the mobile terminal can be upgraded even in the circumstance that the software upgrade needs to change the memory partition table. The implementation method thereof is simple and achieved through software, and the cost is low.

Based on the above software upgrade method for a mobile terminal, the present invention further provides a software upgrade system for a mobile terminal. Please refer to Fig.7. Fig.7 is a structural block diagram of a preferred embodiment of the software upgrade system for a mobile terminal according to the present invention. As shown in Fig.7, said system comprises:
a backup list generating module 10 for, according to the new version software and the old version software, locating partition tables of the new version software and the old version software, respectively, comparing the difference between the new and old partition tables, and generating a corresponding backup list; see Step S100 for details.
a differential upgrade package generating module 20 for scanning all files of the new version software and generating a differential upgrade package that comprises the partition table of said new version software and the backup list; see Step S200 for details.
a capacity detection module 30 for, according to the backup list in said differential upgrade package, detecting the total size of the backup data to be backed up in the mobile terminal, and comparing said total size of the backup data with the remaining space of the SD card of the mobile terminal; see Step S300 for details.
a data backup and recovery module 40 for saving the backup data to be backed up in the mobile terminal into the SD card according to said backup list, re-partitioning the mobile terminal memory according to said partition table of the new version software in said differential upgrade package, detecting the partition type, and correspondingly writing the backup data on the SD card into the partition; see Step S400 for details.
an upgrade module 50 for decompressing said differential upgrade package to obtain a corresponding differentiating file, generating corresponding new version files according to said differentiating file and the old version files in the mobile terminal, and writing into the mobile terminal to complete the upgrade; see Step S500 for details.

Specifically, said backup list generating module 10 locates, according to the new version software and the old version software, partition tables of the new version software and the old version software, respectively, compares the difference between the new and old partition tables, and generates a corresponding backup list. Said differential upgrade package generating module 20 scans all files of the new version software and generates a differential upgrade package that comprises the partition table of said new version software and the backup list. Said capacity detection module 30 detects, according to the backup list in said differential upgrade package, the total size of the backup data to be backed up in the mobile terminal, and compares said total size of the backup data with the remaining space of the SD card of the mobile terminal, when said total size of the backup data is smaller than the remaining space of the SD card of the mobile terminal, said data backup and recovery module 40 saves the backup data to be backed up in the mobile terminal into the SD card according to said backup list, re-partitions the mobile terminal memory according to said partition table of the new version software in said differential upgrade package, detects the partition type, and correspondingly writes the backup data on the SD card into the partitions. Subsequently, said upgrade module 50 decompresses said differential upgrade package to obtain a corresponding differentiating file, generates corresponding new version files according to said differentiating file and the old version files in the mobile terminal, and writes into the mobile terminal to complete the upgrade. In a practical application, said backup list generating module 10 and said differential upgrade package generating module 20 are disposed at the PC end, i.e. the server end. Said capacity detection module 30, said data backup and recovery module 40 and said upgrade module 50 are disposed at the mobile terminal for receiving the differential upgrade package from the PC end and carrying out corresponding software upgrade.

Specifically, said backup list generating module 10 specifically comprises:
a partition table acquisition unit for, according to the new version software and the old version software, acquiring partition tables of the new version software and the old version software, respectively;
a partition table traversing unit for traversing the partition table of the new version;
a name comparison unit for taking one item from the new partition table, and checking if a partition in the old partition table has the same name;
a size and starting address comparison unit for checking if both new and old partitions have the same size and starting address;
a backup list revising unit for checking the partition type and adding a description item in the backup list to describe the name and type of said partition.

Said capacity detection module 30 specifically comprises:
a SD card detecting unit for checking if the mobile terminal has a SD card;
a first backup list traversing unit for acquiring the backup list from the differential upgrade package, reading the existing partition table from the mobile terminal memory, and traversing the backup list;
a backup data total size calculation unit for taking one item from the backup list, locating the corresponding partition in the existing partition table, checking the partition type, if it is a partition of raw data type, adding cumulatively the partitions until the size is up to the total size of the backup data; if it is a partition of filesystem type, adding cumulatively the total size of all files in the partition up to the total size of the backup data;
a capacity comparison unit for checking the size of the remaining space of the SD card of the mobile terminal, and comparing the total size of the backup data with the remaining space of the SD card of the mobile terminal.

Said data backup and recovery module 40 specifically comprises:
a second backup list traversing unit for acquiring the backup list from the differential upgrade package, reading the existing partition table from the mobile terminal memory, and traversing the backup list;
a data backup unit for taking one item from the backup list, locating the corresponding partition in the existing partition table, checking the partition type, if it is a partition of raw data type, reading data from the whole partition, and saving these data as one file on the SD card; if it is a partition of filesystem type, packing files in the partition to one file in the TAR file format, and saving this file onto the SD card;
a third backup list traversing unit for acquiring the new partition table from the differential upgrade package, re-partitioning the mobile terminal memory according to the new partition table, and traversing the backup list;
a data recovery unit for taking one item from the backup list, locating the corresponding partition in the new partition table, checking the partition type, if it is a partition of raw data type, writing the corresponding file that is backed up on the SD card into the partition; if it is a partition of filesystem type, decompressing the corresponding TAR file that is backed up on the SD card, and writing all files in the TAR file into the partition.

Since said differential upgrade package generating module 20 and said upgrade module 50 are the same as the existing FOTA method, they will not be described in detail herein.

In summary, the present invention provides a software upgrade method and system for a mobile terminal, said method locates, according to the new version software and the old version software, partition tables of the new version software and the old version software, respectively, compares the difference between the new and old partition tables, and generates a corresponding backup list; scans all files of the new version software and generates a differential upgrade package that comprises the partition table of said new version software and the backup list; according to the backup list in said differential upgrade package, detects the total size of the backup data to be backed up in the mobile terminal, and compares said total size of the backup data with the remaining space of the SD card of the mobile terminal, and when said total size of the backup data is smaller than the remaining space of the SD card of the mobile terminal, saves the backup data to be backed up in the mobile terminal into the SD card according to said backup list, re-partitions the mobile terminal memory according to said partition table of the new version software in said differential upgrade package, detects the partition type, and correspondingly writes the backup data on the SD card into the partitions;
decompresses said differential upgrade package to obtain a corresponding differentiating file, generates corresponding new version files according to said differentiating file and the old version files in the mobile terminal, and writes into the mobile terminal to complete the upgrade, such that the mobile terminal can be upgraded even in the circumstance that the software upgrade needs to change the memory partition table. The implementation method thereof is simple and achieved through software, and the cost is low, which makes it greatly convenient for users.

It should be understood that applications of the present invention are not limited to the above examples, and to those skilled in the art improvements or modifications may be made according to the description above, and all of these improvements and modifications shall be encompassed by the appended claims of the present invention.

## Claims

1. A software upgrade method for a mobile terminal, **characterized in that** it comprises the following steps:
A. According to the new version software and the old version software, locating partition tables of the new version software and the old version software, respectively, comparing the difference between the new and old partition tables, and generating a corresponding backup list;
B. Scanning all files of the new version software and generating a differential upgrade package that comprises the partition table of said new version software and the backup list;
C. According to the backup list in said differential upgrade package, detecting the total size of the backup data to be backed up in the mobile terminal, and comparing said total size of the backup data with the remaining space of the SD card of the mobile terminal, and when said total size of the backup data is smaller than the remaining space of the SD card of the mobile terminal, going to Step D;
D. Saving the backup data to be backed up in the mobile terminal into the SD card according to said backup list, re-partitioning the mobile terminal memory according to said partition table of the new version software in said differential upgrade package, detecting the partition type, and correspondingly writing the backup data on the SD card into the partition;
E. Decompressing said differential upgrade package to obtain a corresponding differentiating file, generating corresponding new version files according to said differentiating file and the old version files in the mobile terminal, and writing into the mobile terminal to complete the upgrade.

2. The software upgrade method for a mobile terminal according to Claim 1, **characterized in that** Step A specifically comprises:
A1. According to the new version software and the old version software, acquiring partition tables of the new version software and the old version software, respectively;
A2. Traversing the partition table of the new version, if traversal is not completed, going to Step A3; if traversal is completed, ending;
A3. Taking one item from the new partition table and checking if a partition in the old partition table has the same name, if yes, going to Step A4; if no, going to Step A2;
A4. Checking if both new and old partitions have the same size and starting address, if yes, going to Step A2; if no, going to Step A5;
A5. Checking the partition type, adding a description item in the backup list to describe the name and type of said partition, and returning to Step A2.

3. The software upgrade method for a mobile terminal according to Claim 1, **characterized in that** Step B specifically comprises:
B 1. Scanning all files of the new version and old version software packages and obtaining corresponding file lists, respectively;
B2. Traversing the partition table of the new version, if traversal is not completed, going to Step B3; if traversal is completed, adding the partition table of the new version into the differential upgrade package, and ending;
B3. Taking one item from the file list of the new version, and checking if a file in the file list of the old version has the same file name, if no, adding the file of the new version into the differential upgrade package in a word by word manner, and going to Step B2; if yes, continuing to Step B4;
B4. In a differentiating package comparison tool, using files of the new version and old version as input to generate a differentiating file, adding a corresponding description item in the differentiating file, and returning to Step B2.

4. The software upgrade method for a mobile terminal according to Claim 1, **characterized in that** Step C specifically comprises:
C1. Checking if the mobile terminal has a SD card, if yes, going to Step C2, if no, reporting an error, and ending;
C2. Acquiring the backup list from the differential upgrade package, reading the existing partition table from the mobile terminal memory, traversing the backup list, if traversal is not completed, going to Step C3; if traversal is completed, going to Step C4;
C3. Taking one item from the backup list, locating the corresponding partition in the existing partition table, checking the partition type, if it is a partition of raw data type, adding cumulatively the partitions until the size is up to the total size of the backup data; if it is a partition of filesystem type, adding cumulatively the total size of all files in the partition up to the total size of the backup data; returning to Step C2 until traversal is completed;
C4. Checking the size of the remaining space of the SD card of the mobile terminal, if it is larger than the total size of the backup data, going to Step D; otherwise, reporting an error, and ending.

5. The software upgrade method for a mobile terminal according to Claim 1, **characterized in that** Step D specifically comprises:
D1. Acquiring the backup list from the differential upgrade package, reading the existing partition table from the mobile terminal memory, traversing the backup list, if traversal is not completed, going to Step D2; if traversal is completed, going to Step D3;
D2. Taking one item from the backup list, locating the corresponding partition in the existing partition table, checking the partition type, if it is a partition of raw data type, reading data from the whole partition, and saving these data as one file on the SD card; if it is a partition of filesystem type, packing files in the partition to one file in the TAR file format, and saving this file onto the SD card; returning to Step D 1 until traversal is completed;
D3. Acquiring the new partition table from the differential upgrade package, re-partitioning the mobile terminal memory according to the new partition table, traversing the backup list, if traversal is not completed, going to Step D4; if traversal is completed, ending;
D4. Taking one item from the backup list, locating the corresponding partition in the new partition table, checking the partition type, if it is a partition of raw data type, writing the corresponding file that is backed up on the SD card into the partition; if it is a partition of filesystem type, decompressing the corresponding TAR file that is backed up on the SD card, and writing all files in the TAR file into the partition, and returning to Step D3 until traversal is completed.

6. The software upgrade method for a mobile terminal according to Claim 1, **characterized in that** Step E specifically comprises:
E1. Decompressing the differential upgrade package to obtain the corresponding differentiating file and the differentiating file list, traversing the differentiating file list, if traversal is not completed, going to Step E2; if traversal is completed, ending;
E2. Taking one item from the differentiating file list, generating corresponding new version files according to said differentiating file and to the old version files in the mobile terminal, writing into the mobile terminal, and returning to Step E1 until traversal is completed.

7. A software upgrade method for a mobile terminal, **characterized in that** it comprises the following steps:
A. According to the new version software and the old version software, locating partition tables of the new version software and the old version software, respectively, comparing the difference between the new and old partition tables, and generating a corresponding backup list;
B. Scanning all files of the new version software and generating a differential upgrade package that comprises the partition table of said new version software and the backup list;
C. According to the backup list in said differential upgrade package, detecting the total size of the backup data to be backed up in the mobile terminal, and comparing said total size of the backup data with the remaining space of the SD card of the mobile terminal, and when said total size of the backup data is smaller than the remaining space of the SD card of the mobile terminal, going to Step D;
D. Saving the backup data to be backed up in the mobile terminal into the SD card according to said backup list, re-partitioning the mobile terminal memory according to said partition table of the new version software in said differential upgrade package, detecting the partition type, and correspondingly writing the backup data on the SD card into the partition;
E. Decompressing said differential upgrade package to obtain a corresponding differentiating file, generating corresponding new version files according to said differentiating file and the old version files in the mobile terminal, and writing into the mobile terminal to complete the upgrade;
- wherein, the partition table in Step A has two forms: at a PC end, the partition table is present in the form of a partition table description file, which comprises partition name, partition size, partition starting address and partition type; at a cell phone end, the partition table is present in the form of memory header data and memory internal partition table data, which also comprises partition name, partition size, partition starting address and partition type; then, the PC end compares the difference between the new and old partition tables, and generates a corresponding backup list;
- Step E specifically comprises:
E1. Decompressing the differential upgrade package to obtain the corresponding differentiating file and the differentiating file list, traversing the differentiating file list, if traversal is not completed, going to Step E2; if traversal is completed, ending;
E2. Taking one item from the differentiating file list, generating corresponding new version files according to said differentiating file and the old version files in the mobile terminal, writing into the mobile terminal, and returning to Step E1 until traversal is completed.

8. The software upgrade method for a mobile terminal according to Claim 7, **characterized in that** Step A specifically comprises:
A1. According to the new version software and the old version software, acquiring partition tables of the new version software and the old version software, respectively;
A2. Traversing the partition table of the new version, if traversal is not completed, going to Step A3; if traversal is completed, ending;
A3. Taking one item from the new partition table, and checking if a partition in the old partition table has the same name, if yes, going to Step A4; if no, going to Step A2;
A4. Checking if both new and old partitions have the same size and starting address, if yes, going to Step A2; if no, going to Step A5;
A5. Checking the partition type, adding a description item in the backup list to describe the name and type of said partition, and returning to Step A2.

9. The software upgrade method for a mobile terminal according to Claim 7, **characterized in that** Step B specifically comprises:
B 1. Scanning all files of the new version and old version software packages and obtaining corresponding file lists, respectively;
B2. Traversing the partition table of the new version, if traversal is not completed, going to Step B3; if traversal is completed, adding the partition table of the new version into the differential upgrade package, and ending;
B3. Taking one item from the file list of the new version, and checking if a file in the file list of the old version has the same file name, if no, adding the file of the new version into the differential upgrade package in a word by word manner, and going to Step B2; if yes, continuing to Step B4;
B4. In a differentiating package comparison tool, using files of the new version and old version as input to generate a differentiating file, adding a corresponding description item in the differentiating file, and returning to Step B2.

10. The software upgrade method for a mobile terminal according to Claim 7, **characterized in that** Step C specifically comprises:
C1. Checking if the mobile terminal has a SD card, if yes, going to Step C2, if no, reporting an error, and ending;
C2. Acquiring the backup list from the differential upgrade package, reading the existing partition table from the mobile terminal memory, traversing the backup list, if traversal is not completed, going to Step C3; if traversal is completed, going to Step C4;
C3. Taking one item from the backup list, locating the corresponding partition in the existing partition table, checking the partition type, if it is a partition of raw data type, adding cumulatively the partitions until the size is up to the total size of the backup data; if it is a partition of filesystem type, adding cumulatively the total size of all files in the partition up to the total size of the backup data; returning to Step C2 until traversal is completed;
C4. Checking the size of the remaining space of the SD card of the mobile terminal, if it is larger than the total size of the backup data, going to Step D; otherwise, reporting an error, and ending.

11. The software upgrade method for a mobile terminal according to Claim 7, **characterized in that** Step D specifically comprises:
D1. Acquiring the backup list from the differential upgrade package, reading the existing partition table from the mobile terminal memory, traversing the backup list, if traversal is not completed, going to Step D2; if traversal is completed, going to Step D3;
D2. Taking one item from the backup list, locating the corresponding partition in the existing partition table, checking the partition type, if it is a partition of raw data type, reading data from the whole partition, and saving these data as one file on the SD card; if it is a partition of filesystem type, packing files in the partition to one file in the TAR file format, and saving this file onto the SD card; returning to Step D 1 until traversal is completed;
D3. Acquiring the new partition table from the differential upgrade package, re-partitioning the mobile terminal memory according to the new partition table, traversing the backup list, if traversal is not completed, going to Step D4; if traversal is completed, ending;
D4. Taking one item from the backup list, locating the corresponding partition in the new partition table, checking the partition type, if it is a partition of raw data type, writing the corresponding file that is backed up on the SD card into the partition; if it is a partition of filesystem type, decompressing the corresponding TAR file that is backed up on the SD card, and writing all files in the TAR file into the partition, and returning to Step D3 until traversal is completed.

12. The software upgrade method for a mobile terminal according to Claim 7, **characterized in that** Step E specifically comprises:
E1. Decompressing the differential upgrade package to obtain the corresponding differentiating file and the differentiating file list, traversing the differentiating file list, if traversal is not completed, going to Step E2; if traversal is completed, ending;
E2. Taking one item from the differentiating file list, generating corresponding new version files according to said differentiating file and the old version files in the mobile terminal, writing into the mobile terminal, and returning to Step E1 until traversal is completed.

13. A software upgrade system for a mobile terminal, **characterized in that** it comprises:
- a backup list generating module for, according to the new version software and the old version software, locating partition tables of the new version software and the old version software, respectively, comparing the difference between the new and old partition tables, and generating a corresponding backup list;
- a differential upgrade package generating module for scanning all files of the new version software and generating a differential upgrade package that comprises the partition table of said new version software and the backup list;
- a capacity detection module for, according to the backup list in said differential upgrade package, detecting the total size of the backup data to be backed up in the mobile terminal, and comparing said total size of the backup data with the remaining space of the SD card of the mobile terminal;
- a data backup and recovery module for saving the backup data to be backed up in the mobile terminal into the SD card according to said backup list, repartitioning the mobile terminal memory according to said partition table of the new version software in said differential upgrade package, detecting the partition type, and correspondingly writing the backup data on the SD card into the partition;
- an upgrade module for decompressing said differential upgrade package to obtain a corresponding differentiating file, generating corresponding new version files according to said differentiating file and the old version files in the mobile terminal, and writing into the mobile terminal to complete the upgrade.

14. The software upgrade system for a mobile terminal according to Claim 13, **characterized in that** said backup list generating module specifically comprises:
- a partition table acquisition unit for, according to the new version software and the old version software, acquiring partition tables of the new version software and the old version software, respectively;
- a partition table traversing unit for traversing the partition table of the new version;
- a name comparison unit for taking one item from the new partition table, and checking if a partition in the old partition table has the same name;
- a size and starting address comparison unit for checking if both new and old partitions have the same size and starting address;
- a backup list revising unit for checking the partition type and adding a description item in the backup list to describe the name and type of said partition.

15. The software upgrade system for a mobile terminal according to Claim 13, **characterized in that** said capacity detection module specifically comprises:
- a SD card detecting unit for checking if the mobile terminal has a SD card;
- a first backup list traversing unit for acquiring the backup list from the differential upgrade package, reading the existing partition table from the mobile terminal memory, and traversing the backup list;
- a backup data total size calculation unit for taking one item from the backup list, locating the corresponding partition in the existing partition table, checking the partition type, if it is a partition of raw data type, adding cumulatively the partitions until the size is up to the total size of the backup data; if it is a partition of filesystem type, adding cumulatively the total size of all files in the partition up to the total size of the backup data;
- a capacity comparison unit for checking the size of the remaining space of the SD card of the mobile terminal, and comparing the total size of the backup data with the remaining space of the SD card of the mobile terminal.

16. The software upgrade system for a mobile terminal according to Claim 13, **characterized in that** said data backup and recovery module specifically comprises:
- a second backup list traversing unit for acquiring the backup list from the differential upgrade package, reading the existing partition table from the mobile terminal memory, and traversing the backup list;
- a data backup unit for taking one item from the backup list, locating the corresponding partition in the existing partition table, checking the partition type, if it is a partition of raw data type, reading data from the whole partition, and saving these data as one file on the SD card; if it is a partition of filesystem type, packing files in the partition to one file in the TAR file format, and saving this file onto the SD card;
- a third backup list traversing unit for acquiring the new partition table from the differential upgrade package, re-partitioning the mobile terminal memory according to the new partition table, and traversing the backup list;
- a data recovery unit for taking one item from the backup list, locating the corresponding partition in the new partition table, checking the partition type, if it is a partition of raw data type, writing the corresponding file that is backed up on the SD card into the partition; if it is a partition of filesystem type, decompressing the corresponding TAR file that is backed up on the SD card, and writing all files in the TAR file into the partition.
